# EUROPÄISCHE PATENTANMELDUNG

(11) **EP 4 374 701 A1**
(43) Veröffentlichungstag der Anmeldung: **29.05.2024**
(21) Anmeldenummer: 22209139.9
(22) Anmeldetag: 23.11.2022
(51) Int. Cl.: A22C 17/00, B26D 7/26, B26D 7/06, B26D 1/24, B26D 1/143, B26D 1/00

(54) **VORRICHTUNG ZUM SCHNEIDEN VON LEBENSMITTELPRODUKTEN UND VORRICHTUNG ZUM VERARBEITEN VON LEBENSMITTELPRODUKTEN SOWIE EIN BEFESTIGUNGSMECHANISMUS**

(71) Anmelder: NORDISCHER MASCHINENBAU RUD. BAADER GMBH + CO KG, 23560 Lübeck (DE)
(72) Erfinder: Krepinsky, Gunnar, 23560 Lübeck (DE)
(74) Vertreter: Stork Bamberger Patentanwälte PartmbB

(57) **Zusammenfassung**

Die Erfindung betrifft eine Vorrichtung (10) zum Schneiden von Lebensmittelprodukten (11), umfassend mindestens eine Messereinrichtung (12) zur lösbaren Anordnung eines Messerelements (13), mindestens eine drehbar gelagerte Messerwelle (14), die zur Aufnahme der Messereinrichtung (12) ausgebildet und eingerichtet ist, mindestens ein Antriebselement, das dazu ausgebildet und eingerichtet ist, die Messerwelle (14) in eine Drehrichtung (D) anzutreiben, wobei die Messereinrichtung (12) einen Befestigungsmechanismus (15) zur lösbaren Befestigung eines Messerelementes (13) auf der Messerwelle (14) umfasst, wobei der Befestigungsmechanismus (15) als Messerschnellverschluss (16) ausgebildet und eingerichtet ist. Die Erfindung betrifft auch eine Vorrichtung (10) zum Verarbeiten von Lebensmittelprodukten (11). Weiter betrifft die Erfindung einen entsprechenden Befestigungsmechanismus (15).

## Beschreibung

Die Erfindung betrifft eine Vorrichtung zum Schneiden von Lebensmittelprodukten, umfassend mindestens eine Messereinrichtung zur lösbaren Anordnung eines Messerelements, mindestens eine drehbar gelagerte Messerwelle, die zur Aufnahme der Messereinrichtung ausgebildet und eingerichtet ist, mindestens ein Antriebselement, das dazu ausgebildet und eingerichtet ist, die Messerwelle in eine Drehrichtung anzutreiben.

Weiterhin betrifft die Erfindung eine Vorrichtung zum Verarbeiten von Lebensmittelprodukten, insbesondere zum Verarbeiten von Schlachtkörpern, umfassend eine Transporteinheit, ausgebildet und eingerichtet zum Transportieren der Lebensmittelprodukte in Transportrichtung T entlang eines Transportpfads durch mindestens eine Bearbeitungsstation zum Verarbeiten der Schlachtkörper, nämlich eine Vorrichtung zum Lösen und/oder Schneiden von Fleisch oder Schlachtkörperbestandteilen von einem Schlachtkörper oder Teilen davon.

Weiter betrifft die Erfindung einen Befestigungsmechanismus zur lösbaren Befestigung eines Messerelementes auf einer Messerwelle.

Vorrichtungen zum Schneiden oder Verarbeiten von Lebensmittelprodukten sind seit vielen Jahren aus dem Stand der Technik bekannt. Derartige Vorrichtungen kommen in einer Vielzahl von unterschiedlichen Industriezweigen zum Einsatz und sind immer dann erforderlich, wenn Lebensmittelprodukte zerkleinert, abgetrennt, getrimmt, geteilt etc. werden müssen. Im Rahmen der automatischen oder automatisierbaren Verarbeitung von Lebensmittelprodukten sind insbesondere Messereinrichtungen mit Kreismessern geläufig, die z. B. in der fleischverarbeitenden Industrie eingesetzt werden. Derartige Lebensmittelprodukte können beispielsweise aus dem Bereich der Schlachtkörper zur Verarbeitung vorgesehen sein, wobei industriell verarbeitbare Schlachtkörper wie Fische oder Geflügel geläufig sind.

Im industriellen Einsatz derartiger Vorrichtungen zum Schneiden oder Verarbeiten von Lebensmittelprodukten ist es regelmäßig erforderlich, dass die auf der Messereinrichtung anordenbaren Messerelemente - u. a. auch Schneidmittel oder Schneidelemente genannt -regelmäßig ausgetauscht oder gewechselt werden müssen. Ein Austausch von Messerelementen ist beispielsweise erforderlich, um diese zu schärfen, zu ersetzen oder um einen Wechsel des zweckentsprechenden Messerelements vorzunehmen. Bei den herkömmlichen Vorrichtungen sind die Messerelemente mit Messermuttern auf der Messerwelle gesichert. Eine Sicherung der Messerelemente mit Messermuttern stellt eine kostengünstige und simple Möglichkeit zur Anordnung eines Messerelements auf einer Messereinrichtung dar. Die Anordnung ist allerdings fehleranfällig, zeitaufwendig und birgt ein erhebliches Verletzungsrisiko bei einem Wechsel von Messerelementen.

Bei den herkömmlichen Vorrichtungen werden die Messerelemente durch eine Gewindelösung mit einer dazu passenden Außenkontur auf der Messereinrichtung befestigt. Dazu weist die Messerwelle bzw. die Messereinrichtung regelmäßig eine Schraube oder einen Gewindebolzen auf, um ein Gegenstück mit einem Innengewinde zur Befestigung anzuordnen. Derartige Gegenstücke sind häufig als Muttern (Messermuttern) oder dergleichen ausgebildet, die mit einem Schraubschlüssel zur Befestigung des entsprechenden Messerelements vorgesehen sind. Zum Lösen oder Befestigen der Messermuttern ist mit einem Schraubenschlüssel eine kreisförmige Bewegung entlang der Schneide des Messerelements auszuführen. Hierbei besteht insbesondere beim anfänglichen Lösen oder beim finalen Befestigen ein Sicherheitsrisiko, da hier die Gefahr des Abrutschens erhöht ist und ein großer Kraftaufwand erforderlich ist. Ein besonderes Gefahrenpotential besteht dann, wenn die Messermuttern mit einem punktuellen Krafteintrag, beispielsweise bei einem Ruck, gelöst werden müssen. Weiter können durch den Einsatz von Schraubschlüsseln Beschädigungen durch zu starken Krafteintrag des Schraubschlüssel an der Messereinrichtung auftreten. Falls jedoch eine unzureichende Befestigung der Messermutter ausgeführt wird, kann dies zu einem unerwünschten Lösen des Messerelements während des bestimmungsgemäßen Gebrauchs der Vorrichtung führen. Darüber hinaus kann durch häufiges Lösen und Befestigen das Innen- oder Außengewinde der Schraubverbindung beschädigt werden, was einerseits zu einer unzureichenden Befestigung führt oder einen Austausch der betreffenden Bauteile erfordert, was zu einem unerwünschten und unplanbaren Zeit- und Kostenaufwand führt.

Insgesamt ist das Wechseln der Messerelemente mit den bekannten Befestigungsmechanismen, insbesondere an schwer zugänglichen Orten, langwierig und umständlich sowie mit einem hohen Gefahrenpotential versehen. Bei den bekannten Vorrichtungen sind zudem häufig paarweise angeordnete Messereinrichtungen vorgesehen, die jeweils ein eigenständiges Messerelement (Kreismesser) aufweisen. Bei einer paarweisen Anordnung von Messerelementen haben die Gewinde auf den unterschiedlichen Seiten in der Regel jeweils eine unterschiedliche Drehrichtung, weshalb spezifische Messermuttern erforderlich sind, die in der Regel ein links- oder rechtsdrehendes Gewinde aufweisen. Im bestimmungsgemäßen Gebrauch der Vorrichtungen führt dies zu Verzögerung bei der Umrüstung, da unterschiedliche Schraubenmuttern vorgehalten werden müssen.

Es ist daher Aufgabe der vorliegenden Erfindung eine Vorrichtung zum Schneiden von Lebensmittelprodukten bereitzustellen, welche eine zuverlässige Befestigung von Messerelementen gewährleistet und dabei gleichzeitig schnell und komfortabel zu bedienen ist, die bei der Bedienung zudem ein geringes Verletzungsrisiko bereithält. Die Aufgabe besteht weiterhin darin, eine entsprechende Vorrichtung zum Verarbeiten von Lebensmittelprodukten bereitzustellen.

Diese Aufgabe wird durch die eingangs genannte Vorrichtung zum Schneiden von Lebensmittelprodukten dadurch gelöst, dass die Messereinrichtung einen Befestigungsmechanismus zur lösbaren Befestigung eines Messerelementes auf der Messerwelle umfasst, wobei der Befestigungsmechanismus als Messerschnellverschluss ausgebildet und eingerichtet ist. Durch die erfindungsgemäße Vorrichtung wird sichergestellt, dass eine einfache, schnelle sowie sichere Befestigung eines Messerelementes auf einer Messereinrichtung gewährleistet ist. Der als Messerschnellverschluss ausgebildete und eingerichtete Befestigungsmechanismus ermöglicht insbesondere einen Wechsel von Messerelementen ohne das Ausführen einer Drehbewegung der Hände, wodurch die Verletzungsgefahr für den Anwender minimiert wird. Es muss auf diese Weise keine Bewegung in Verlauf der Messerschneide ausgeführt werden und der Arbeitsbereich beim Wechseln der Messerelemente konzentriert sich auf den zentrierten Bereich der Messereinrichtung. Weiter zeichnet sich der erfindungsgemäße Messerschnellverschluss bevorzugt dadurch aus, dass eine werkzeugfreie Anwendung gegeben ist. Das Betätigen des Messerschnellverschlusses kann vorzugsweise händisch erfolgen, wodurch die Handhabung vereinfacht wird und der Platzbedarf bzgl. des Bewegungsradius bei einem Wechsel der Messerelemente gering ist. Neben einer einfachen und schnellen Montage bzw. Bedienung des Messerschnellverschlusses ist eine zuverlässige Fixierung der Messerelemente auf der Messerwelle gegeben, um einen bestimmungsgemäßen Einsatz zur Bearbeitung von Lebensmittelprodukten zu gewährleisten. Durch den Messerschnellverschluss ist eine links- und rechtsdrehende Bewegung des Messerelementes bereitstellbar, ohne dass eine Lockerung oder Lösung einer Messermutter erfolgen muss. Der Messerschnellverschluss stellt während des gesamten Nutzungszeitraum eine konstante und gleichbleibende Fixierung bereit. Der erfindungsgemäße Messerschnellverschluss kann grundsätzlich in der Ausgestaltung flexibel ausgebildet und eingerichtet sein, wobei jedoch jeweils eine lösbare Befestigung eines Messerelementes auf der Messerwelle bereitstellbar ist. Der Messerschnellverschluss ist vorzugsweise zur einhändigen sowie werkzeugfreien Verwendung ausgestaltet. Weiter stellt der Messerschnellverschluss bevorzugt eine gewindefreie Verbindung zwischen dem Messerschnellverschluss und dem Grundkörper bzw. der Messerwelle bereit. Die Messerwelle ist zumindest drehbar gelagert, wobei die Messerwelle jedoch weiter bevorzugt axial verschieblich ausgebildet und eingerichtet ist. Vorzugsweise umfassen derartige Vorrichtungen zum Schneiden von Lebensmittelprodukten mindestens ein Messereinrichtungspaar, das aus zwei - bevorzugt gegenüberliegend angeordneten - der Messereinrichtungen zur Anordnung jeweils eines Messerelementes besteht. Das Material bzw. die Materialien der Messereinrichtung ist nicht erfindungsrelevant, wobei die Materialauswahl bevorzugt ausreichend hart, dauerhaft und hygienisch ist, um einen zuverlässigen Einsatz in der lebensmittelverarbeitenden Industrie zu gewährleisten. Vorzugsweise ist die Messereinrichtung, insbesondere die Messerwelle und/oder der Messerschnellverschluss aus Metall, besonders bevorzugt aus einem Edelstahl, gefertigt. Alternativ ist es möglich, dass die Messereinrichtung oder einzelne Bauteile davon aus einem Kunststoff, beispielsweise ABS, PA, PE, POM, PP, PVC etc., insbesondere aus einem harten und lebensmittelechtem Kunststoff ausgewählt sind.

Der Messerschnellverschluss ist insgesamt zur Ausbildung der lösbaren Verbindung zwischen der rotierbaren bzw. rotierbar angetriebenen Messerwelle und dem Messerelement vorgesehen. Der Messerschnellverschluss stellt dazu eine Kopplungseinrichtung dar, um das Messerelement koppelbar an der Messereinrichtung anzuordnen. Für das Lösen eines Verschlusses der Kopplungseinrichtung ist es möglich, auf manuelle Weise die Verbindung zwischen der Messerwelle und dem Messerelement zu lösen bzw. die Verbindung entsprechend auszubilden.

Eine bevorzugte Ausführungsform ist dadurch gekennzeichnet, dass die Messereinrichtung einen Messergrundkörper umfasst, wobei der Messergrundkörper mittels des Messerschnellverschlusses in mindestens einer die Messerwelle aufweisenden Ausnehmung lösbar anordenbar ausgebildet und eingerichtet ist, um mindestens ein Messerelement lösbar zu fixieren. Auf diese Weise ist ein sicheres und einfaches Anordnen des Messerelementes durch die Messereinrichtung gegeben. Der Messergrundkörper bildet bevorzugt ein Gegenstück zu der Ausnehmung der Messerwelle, um zumindest eine formschlüssige Anordnung bereitzustellen. Die Gestaltung des Messergrundkörpers kann je nach Einsatzzweck oder Art des Messerelementes angepasst sein und beispielsweise einen runden, ovalen oder quaderförmigen Querschnitt aufweisen, wobei der Querschnitt bevorzugt rotationssymmetrisch ist. Der Messergrundkörper stellt vorzugsweise einen Bereich dar, der zumindest bereichsweise in Anlage mit der Messerwelle, dem Messerschnellverschluss und/oder mit dem Messerelement bringbar ist. Bei einem Betätigen des Messerschnellverschlusses ist der Messergrundkörper in der Ausnehmung der Messerwelle fixierbar oder lösbar, um eine Anordnung des Messerelementes bereitzustellen oder um ein Entfernen des Messerelementes auszubilden und einzurichten. Die Messerwelle kann vorzugsweise zumindest abschnittsweise ein Bestandteil der Messereinrichtung sein, insbesondere kann die Messerwelle in einer bevorzugten Ausführungsform zumindest einen Abschnitt des Messergrundkörpers umfassen.

Eine vorteilhafte Weiterbildung zeichnet sich dadurch aus, dass der Messerschnellverschluss zumindest zwischen einer geöffneten Position und einer geschlossenen Position veränderlich ausgebildet und eingerichtet ist, wobei der Messerschnellverschluss das Messerelement in der geschlossenen Position gegen ein selbsttätiges Lösen fixiert. Zur Veränderung der Positionen ist zumindest ein Bauteil des Messerschnellverschlusses positionsveränderlich ausgebildet und eingerichtet. Das positionsveränderliche Bauteil ist bevorzugt derart beweglich ausgebildet und eingerichtet, um ein Fixieren bzw. ein Lösen des Messerelementes bereitzustellen. Vorzugsweise ist bei einem Positionswechsel aus der geöffneten Position in die geschlossene Position ein visueller und/oder akustischer Hinweis ausgebildet und eingerichtet. Auf diese Weise ist bei der bestimmungsgemäßen Verwendung der Vorrichtung die zuverlässige Fixierung erkennbar. Bevorzugt ist der Messerschnellverschluss in mindestens einer der Positionen arretierbar ausgebildet und eingerichtet, um jeweils einen selbsttätigen Positionswechsel zu verhindern. In einer bevorzugten Ausführungsform ist der Messerschnellverschluss schwenk- oder schiebebeweglich ausgebildet und eingerichtet, wobei bei einer Schwenkbewegung oder einer Schiebebewegung jeweils die Veränderung der Positionen bereitstellbar ist.

In einer bevorzugten Weiterbildung weist die Ausnehmung der Messerwelle mindestens eine Eingriffsausnehmung auf, und der Messergrundkörper umfasst mindestens ein Eingriffselement zum Eingriff mit der Eingriffsausnehmung, wobei das Eingriffselement in der geschlossenen Position des Messerschnellverschlusses kraftschlüssig und/oder formschlüssig im Eingriff mit der mindestens einen Eingriffsausnehmung ausgebildet und eingerichtet ist und wobei das mindestens eine Eingriffselement in der geöffneten Position des Messerschnellverschlusses im Wesentlichen eingriffsfrei mit der mindestens einen Eingriffsausnehmung ausgebildet und eingerichtet ist. Durch die Kombination aus der mindestens einen Eingriffsausnehmung in Verbindung mit dem mindestens einen Eingriffselement ist eine verbesserte Fixierung des Messerelementes durch den kraft- und/oder formschlüssigen Eingriff möglich, wodurch eine zuverlässige Anordnung auf der erfindungsgemäßen Vorrichtung gegeben ist. Bevorzugt ist der Eingriff des mindestens einen Eingriffselements in der mindestens einen Eingriffsausnehmung kraft- und/oder formschlüssig ausgebildet und eingerichtet, um eine Verliersicherung des Messerelementes gegen möglichst viele auftretende Kräfte bereitzuhalten. Bevorzugt ist eine Mehrzahl an Eingriffselementen vorgesehen, die durch den Messerschnellverschluss zum Eingriff mit der mindestens einen Eingriffsausnehmung in der Positionierung veränderlich ausbildbar sind. Es ist im Sinne der Erfindung nicht unmittelbar erforderlich, dass bei einer Überführung des Messerschnellverschlusses von der geschlossenen Position in die geöffnete Position eine Rückführung des mindestens einen Eingriffselements aus der mindestens einen Eingriffsausnehmung bereitstellbar ist. Weiter bevorzugt erfolgt bei einer Veränderung des Messerschnellverschlusses aus der geschlossenen Position in die geöffnete Position eine Freigabe des mindestens einen Eingriffselementes, so dass der kraft- und/oder formschlüssige Eingriff aufhebbar ist. Die Ausgestaltung des mindestens einen Eingriffselementes ist nicht erfindungsrelevant und der Körper des mindestens einen Eingriffselementes kann grundsätzlich jegliche Form aufweisen, die in einer Eingriffsausnehmung anordenbar ist. Bei der Auswahl des entsprechenden Eingriffselementes sind jedoch insbesondere eine mögliche Verkantung oder Verdrehung sowie mögliche Materialkosten zu beachten. Vorzugsweise ist die Form des mindestens einen Eingriffselementes ausgewählt aus Kugeln, Stiften, Kegeln, Zylinder und/oder Würfeln, wobei die mindestens eine Eingriffsausnehmung jeweils zumindest bereichsweise korrespondierend ausgestaltet sein muss, um eine zuverlässige Anordnung und kraft- und/oder formschlüssige Verbindung zwischen den Bauteilen bereitzustellen. Besonders bevorzugt ist eine kugelförmige Ausgestaltung des mindestens einen Eingriffselementes zweckdienlich, da diese eine zentrierende Wirkung in der mindestens einen Eingriffsausnehmung bereitstellt.

Eine vorteilhafte Weiterbildung zeichnet sich dadurch aus, dass der Messerschnellverschluss mindestens ein Arretierelement und mindestens ein Übertragungselement umfasst, wobei das mindestens eine Arretierelement zur Positionsveränderung des Messerschnellverschlusses zumindest zwischen der geöffneten Position und der geschlossenen Position ausgebildet und eingerichtet ist, indem das mindestens eine Arretierelement derart mit dem mindestens einen Übertragungselement in Wirkverbindung steht, dass es eine Positionsveränderung des mindestens einen Übertragungselements ausbildet und einrichtet. Durch das Zusammenspiel aus dem mindestens einen Arretierelement und dem mindestens einen Übertragungselement ist eine direkte Übertragung und eine Zustandsänderung des Messerschnellverschlusses zwischen der geöffneten und der geschlossenen Position erzeugbar, um eine Fixierung oder ein Lösen des Messerelementes auszubilden und einzurichten. Das mindestens eine Arretierelement ist bevorzugt einhändig bedienbar. Weiter bevorzugt ist durch das mindestens eine Arretierelement eine Kraft auf und/oder mittels des mindestens einen Übertragungselements ausführbar. Durch das mindestens eine Arretierelement und/oder das mindestens eine Übertragungselement ist vorzugsweise direkt oder indirekt eine Veränderlichkeit des mindestens einen Eingriffselements mit der mindestens einen Eingriffsausnehmung bereitstellbar.

In einer weiteren vorteilhaften Ausgestaltung der Erfindung ist das mindestens eine Übertragungselement derart mit dem mindestens einen Eingriffselement in Wirkverbindung bringbar, dass das mindestens eine Übertragungselement bei einer Positionsveränderung einen kraftschlüssigen und/oder formschlüssigen Eingriff des mindestens einen Eingriffselements in die mindestens eine Eingriffsausnehmung ausbildet und einrichtet oder dass das mindestens eine Übertragungselement eine Freigabe des mindestens einen Eingriffselements aus der mindestens einen Eingriffsausnehmung ermöglicht, wobei insbesondere bei einer geöffneten Position des Messerschnellverschlusses eine Freigabe des mindestens einen Eingriffselements aus der mindestens einen Eingriffsausnehmung vorgesehen ist und bei einer geschlossenen Position des Messerschnellverschlusses ein Eingriff des mindestens einen Eingriffselements mit der mindestens einen Eingriffsausnehmung vorgesehen ist. Das mindestens eine Übertragungselement ist insbesondere mit mindestens einem Eingriffselement in Wirkverbindung bringbar, indem bei einer Betätigung des mindestens einen Arretierelementes vorzugsweise eine axiale Verschiebung des mindestens einen Übertragungselementes erfolgt, um eine Veränderbarkeit der Position des mindestens eines Eingriffselementes auszubilden und einzurichten. Bevorzugt greift das mindestens eine Eingriffselement bei einer Überführung des Messerschnellverschlusses in die geschlossene Position zumindest bereichsweise in die mindestens eine Eingriffsausnehmung ein. Weiter bevorzugt bildet das mindestens eine Eingriffselement in der geschlossenen Position des Messerschnellverschlusses eine Kraftübertragung zwischen Messerwelle und Messergrundkörper aus, wodurch das Messerelement auf der Messerwelle fixiert ist.

Eine zweckmäßige Ausgestaltung der Erfindung ist dadurch gekennzeichnet, dass die mindestens eine Eingriffsausnehmung auf der Innenwandung der Ausnehmung der Messerwelle ausgebildet und eingerichtet ist, insbesondere umlaufend ausgebildet und eingerichtet ist. Alternativ kann eine Mehrzahl an Eingriffsausnehmungen ausgebildet und eingerichtet sein, in die jeweils mindestens ein Eingriffselement eingreifbar ist. Eine umlaufende Eingriffsausnehmung ermöglicht eine flexible Möglichkeit zum Eingriff mit mindestens einem Eingriffselement, da keine spezifische Zuordnung zwischen Eingriffselement und Eingriffsausnehmung gegeben sein muss. Die umlaufende Ausnehmung ist insbesondere als Nut, besonders bevorzugt als Ringnut, ausgebildet und eingerichtet.

Eine weitere zweckmäßige Ausgestaltung der Erfindung ist dadurch gekennzeichnet, dass mindestens zwei bis sieben Eingriffselemente vorgesehen sind, besonders bevorzugt drei bis fünf Eingriffselemente. Vorzugsweise sind die Eingriffselemente sternförmig und/oder symmetrisch entlang des Messergrundkörpers angeordnet. Auf diese Weise ist einerseits eine einheitliche Kraftaufnahme bzw. -übertragung gegeben und andererseits wird eine zentrierende sowie fixierende Anordnung des Messerschnellverschlusses auf der Messerwelle unterstützt. In einer bevorzugten Ausführungsform entspricht die Anzahl der Eingriffsausnehmungen der Anzahl der Eingriffselemente. Alternativ kann eine geringere Anzahl an Eingriffsausnehmungen vorliegen, die entsprechend einen Eingriff mehrerer Eingriffselemente ausbilden und einrichten.

Eine bevorzugte Weiterbildung der Erfindung zeichnet sich dadurch aus, dass das mindestens eine Eingriffselement und die mindestens eine Eingriffsausnehmung zumindest abschnittsweise korrespondierend zueinander ausgebildet und eingerichtet sind, insbesondere derart, dass in der geschlossenen Position des Messerschnellverschlusses eine kraftschlüssige und/oder formschlüssige Verbindung zwischen dem mindestens einen Eingriffselement und der mindestens einen Eingriffsausnehmung vorgesehen ist. Anders ausgedrückt ist das mindestens eine Eingriffselement zumindest bereichsweise kongruent zu der mindestens einen Eingriffsausnehmung ausgebildet und eingerichtet, um eine kraftschlüssige und/oder formschlüssige Verbindung zwischen dem mindestens einen Eingriffselement und der mindestens einen Eingriffsausnehmung bereitzustellen. Auf diese Weise ist eine Sicherung des Messerelementes auf der Messerwelle durch den Messerschnellverschluss gegeben, die im Bedarfsfall auf eine schnelle und einfache Art und Weise lösbar ist.

Eine weitere bevorzugte Ausführungsform der Erfindung zeichnet sich dadurch aus, dass das mindestens eine Eingriffselement derart innerhalb des Messergrundkörpers anordenbar ist, dass es beweglich, aber verliersicher ausgebildet und eingerichtet ist. Je nach Ausgestaltung des Messergrundkörpers und/oder des Eingriffselementes können hierzu weitere Bauteile und/oder Gestaltungen vorgesehen sein, um eine Beweglichkeit des mindestens einen Eingriffselementes zu behindern. Vorzugsweise ist das mindestens eine Eingriffselement in einer der Messergrundkörper aufweisenden Ausnehmung anordenbar, um eine beschränkte Beweglichkeit bereitzuhalten. Durch die verliersichere Anordnung des mindestens einen Eingriffselementes ist der Messerschnellverschluss bei einem Wechsel der Messerelemente schnell und komfortabel zu bedienen. Darüber hinaus wird verhindert, dass einzelne Bauteile in den Verarbeitungsprozess gelangen, was insbesondere in der lebensmittelverarbeitenden Industrie unbedingt zu verhindern ist. Besonders bevorzugt ist der Messerschnellverschluss einteilig ausgebildet und eingerichtet, d. h. die vorliegenden Bestandteile sind jeweils miteinander verbunden oder zumindest gegen ein Verlieren gesichert.

Eine vorteilhafte Weiterbildung zeichnet sich dadurch aus, dass das Arretierelement mit dem Messergrundkörper verbunden ist, insbesondere verliersicher verbunden ist. Durch die verliersichere Anordnung des mindestens einen Arretierelementes ist der Messerschnellverschluss bei einem Wechsel der Messerelemente schnell und komfortabel zu bedienen. Darüber hinaus wird verhindert, dass einzelne Bauteile in den Verarbeitungsprozess gelangen, was insbesondere in der lebensmittelverarbeitenden Industrie unbedingt zu verhindern ist. Besonders bevorzugt ist der Messergrundkörper einteilig ausgebildet und eingerichtet, d. h. die vorliegenden Bestandteile sind jeweils miteinander verbunden oder zumindest gegen ein Verlieren untereinander gesichert.

Eine Weiterbildung ist dadurch gekennzeichnet, dass das Arretierelement als zumindest zwischen einer geöffneten Position und einer geschlossenen Position schiebbewegliches Schiebeelement ausgebildet und eingerichtet ist, wobei bei einem Verschieben des Schiebeelements zumindest ein Wechsel zwischen der geöffneten Position und der geschlossenen Position ausgebildet und eingerichtet ist. Schiebeelemente sind insbesondere zur einhändigen Bedienung geeignet, da auf diese Weise durch einen linearen Krafteintrag eine Verschiebbarkeit und somit der Positionswechsel des Arretierelementes ausgebildet und eingerichtet wird. Durch eine Schiebebewegung ist keine Drehbewegung entlang der Messerschneide erforderlich, was die Sicherheit bei einem Wechsel der Messerelemente erhöht. Das Schiebeelement ist vorzugsweise in mindestens zwei Richtungen verschiebbar, um jeweils ein Wechseln zwischen der geöffneten Position und der geschlossenen Position auszubilden und einzurichten.

Eine weitere Weiterbildung ist dadurch gekennzeichnet, dass das Schiebeelement mindestens zwei Schiebeausnehmungen umfasst, die zum zumindest bereichsweisen Eingriff mit dem Übertragungselement ausgebildet und eingerichtet sind, wobei mindestens eine der Schiebeausnehmungen einen geringeren Eingriff mit dem Übertragungselement ausbildet und einrichtet. Die mindestens eine Schiebeausnehmung zur Ausbildung eines geringeren Eingriffs führt bei einer bevorzugten Federvorspannung des Übertragungselementes zu einer größeren linearen Bewegung des Übertragungselementes. Durch die Schiebeausnehmungen ist bei einer Bewegung des Schiebeelements jeweils eine Veränderung des Übertragungselementes ausführbar. Die Schiebeausnehmungen geben einen Bereich vor, in den das Übertragungselement eingreifbar ist, wodurch eine axiale Längsverschiebung erfolgt. Durch die Längsverschiebung ist vorzugsweise eine Veränderbarkeit der Position des mindestens einen Eingriffselementes ausführbar, um das mindestens eine Eingriffselement in Eingriff mit der mindestens einen Eingriffsausnehmung zu bringen bzw. freizugeben. Vorzugsweise ist bei einem Eingriff des Übertragungselementes mit der mindestens einen Schiebeausnehmung zur Ausbildung eines geringeren Eingriffs das mindestens eine Eingriffselement zumindest bereichsweise in die mindestens eine Eingriffsausnehmung überführbar. Weiter bevorzugt ist bei einem Eingriff des Übertragungselementes mit der weiteren Schiebeausnehmung das mindestens eine Eingriffselement aus der mindestens einen Eingriffsausnehmung freigebbar. Die Schiebeausnehmung gibt jeweils einen definierten Bereich vor, um eine durch Krafteintrag vorgesehene Fixierung des Messerelementes durch den Messerschnellverschluss auszubilden und einzurichten.

Eine zweckmäßige Ausgestaltung der Erfindung ist dadurch gekennzeichnet, dass das Arretierelement als zumindest zwischen einer geöffneten Position und einer geschlossenen Position bewegbares Hebelelement ausgebildet und eingerichtet ist, wobei bei einem Betätigen des Hebelelements zumindest ein Wechsel zwischen der geöffneten Position und der geschlossenen Position ausgebildet und eingerichtet ist. Hebelelemente sind insbesondere zur einhändigen Bedienung geeignet, da auf diese Weise durch ein Betätigen des Hebels eine Veränderbarkeit der Position, insbesondere eine Schwenkbewegung, eine Hebelbewegung bzw. eine Klappbewegung, des Arretierelementes ausgebildet und eingerichtet wird. Durch eine entsprechende Bewegung des Hebelelementes ist keine Drehbewegung entlang der Messerschneide erforderlich, was die Sicherheit bei einem Wechsel der Messerelemente erhöht. Bei einem Betätigen des Hebelelementes erfolgt jeweils ein Wechseln zwischen der geöffneten Position und der geschlossenen Position.

Eine weitere zweckmäßige Ausgestaltung der Erfindung ist dadurch gekennzeichnet, dass das Hebelelement als Exzenterhebel ausgebildet und eingerichtet ist, wobei ein Betätigungsabschnitt des Exzenterhebels in der geschlossenen Position in Wirkverbindung mit dem Übertragungselement bringbar ist, und wobei der Betätigungsabschnitt des Exzenterhebels in der geöffneten Position das Übertragungselement freigibt. Der Exzenterhebel ermöglicht durch die Wirkverbindung mit dem Übertragungselement auf diese Weise eine Veränderung des mindestens einen Eingriffselementes in Verbindung mit der Eingriffsausnehmung. Die mindestens zwei Positionen des Exzenterhebels ermöglichen insbesondere bei einer Federvorspannung des Übertragungselementes eine aktive Steuerung des mindestens einen Eingriffselementes. Durch das Betätigen des Hebelelementes, insbesondere von der geöffneten Position in die geschlossene Position, ist eine Veränderung der Position des Übertragungselementes ausführbar. Durch den Exzentermechanismus ist die Bewegung des Übertragungselementes bedingt, wodurch bevorzugt eine axiale Längsverschiebung erfolgt. Durch die Längsverschiebung des Übertragungselementes ist vorzugsweise eine Veränderbarkeit der Position des mindestens einen Eingriffselementes ausführbar, um das mindestens eine Eingriffselement in Eingriff mit der mindestens einen Eingriffsausnehmung zu bringen bzw. freizugeben. Vorzugsweise ist bei einem Überführen des Hebelelementes aus der geöffneten Position in die geschlossene Position das mindestens eine Eingriffselement zumindest bereichsweise in die mindestens eine Eingriffsausnehmung eingreifbar ausgebildet und eingerichtet. Weiter bevorzugt ist bei einem Überführen des Hebelelementes aus der geschlossenen Position in die geöffnete Position das mindestens eine Eingriffselement aus der mindestens einen Eingriffsausnehmung freigebbar. Der Exzenterabschnitt des Hebelelementes gibt jeweils einen definierten Bereich vor, um eine durch Krafteintrag vorgesehene Fixierung des Messerelementes durch den Messerschnellverschluss auszubilden und einzurichten, bzw. um die Verschiebung des Übertragungselementes auszubilden und einzurichten. In einer weiteren bevorzugten Ausführungsform ist eine invertierte Ausgestaltung des Hebelelements gegeben, um eine Veränderung des Übertragungselementes auszubilden und einzurichten. Hierbei ist insbesondere die geschlossene und die geöffnete Position und die daraus resultierende Veränderbarkeit der Position des Eingriffselement entsprechend gegensätzlich ausgebildet und eingerichtet.

Eine vorteilhafte Weiterbildung der Erfindung zeichnet sich dadurch aus, dass die Messereinrichtung mindestens ein Rückstellelement umfasst, das dazu ausgebildet und eingerichtet ist, auf das Übertragungselement eine dieses in die oder in Richtung des Messerschnellverschlusses bewegende Rückstellkraft auszuüben. Durch das Rückstellelement wird im unbelasteten Zustand vorzugsweise ein Ausweichraum des Messergrundkörpers freigegeben, in den das mindestens eine Eingriffselement zumindest abschnittsweise anordenbar ist. Bei einer Bewegung des Übertragungselementes, d. h. bevorzugt gegen die Rückstellkraft, ist das mindestens eine Eingriffselement zumindest abschnittsweise aus dem Ausweichraum des Messergrundkörpers bewegbar, um einen Eingriff mit der mindestens einen Eingriffsausnehmung auszubilden und einzurichten. Anders ausgedrückt stellt der Ausweichraum einen Bewegungsraum für das mindestens eine Eingriffselement dar, um je nach Verschiebung des Übertragungselementes eine Veränderung der Position des mindestens einen Eingriffselementes auszubilden und einzurichten. Das Übertragungselement ist weiter bevorzugt gegen die Rückstellkraft vorspannbar, um eine selbsttätige Bewegung des Übertragungselementes in den Ausweichraum zu verhindern. Das Rückstellelement ist bevorzugt ein Federelement. In einer weiteren bevorzugten Ausführungsform umfasst das Rückstellelement mindestens ein magnetisches und/oder magnetisierbares Bauteil, besonders bevorzugt zwei Magnete, die insbesondere gleichpolig zueinander ausgebildet und eingerichtet sind.

Eine weitere zweckmäßige Ausgestaltung der Erfindung ist dadurch gekennzeichnet, dass das Messerelement mindestens eine Fixierausnehmung umfasst und dass die Messereinrichtung mindestens ein zumindest abschnittsweise mit der mindestens einen Fixierausnehmung korrespondierendes Fixierelement umfasst, wodurch das Messerelement mittels des Messerschnellverschlusses formschlüssig und gegenüber der Messerwelle verdrehfest auf der Messereinrichtung fixiert anordenbar ist. Damit ist das Messerelement im bestimmungsgemäßen Gebrauch in der Vorrichtung gegen ein unerwünschtes Lösen und/oder Rotieren gesichert, wodurch ein präziser Schnitt sowie ein sicherer Betrieb der Vorrichtung gegeben ist. Durch die Kombination aus Fixierelement und Fixierausnehmung kann insbesondere die maximale Kraftübertragung durch das mindestens eine Messerelement vergrößert werden sowie ein Schlupfen verhindert werden. Alternativ oder ergänzend kann das Messerelement mindestens ein Fixierelement umfassen, während die Messereinrichtung mindestens eine mit dem Fixierelement korrespondierende Fixierausnehmung umfasst, wodurch das Messerelement mittels des Messerschnellverschlusses formschlüssig und gegenüber der Messerwelle verdrehfest auf der Messereinrichtung fixiert anordenbar ist. Vorzugsweise weist der Messergrundkörper das mindestens eine Fixierelement und/oder die mindestens eine Fixierausnehmung auf. Derartige Fixierelemente sind beispielsweise unter der Begrifflichkeit Mitnehmerstifte bekannt, wobei ebenfalls Pins, Ausbuchtungen etc. vorgesehen sein können. Derartige Fixierelemente ermöglichen ein Mitnehmen bzw. eine Zentrierung sowie Positionierung des Messerelementes. Grundsätzlich ist jede Kombination aus Fixierelement und Fixierausnehmung möglich, die zumindest einen Formschluss zwischen Messerelement und Messerschnellverschluss ermöglicht.

In einer weiteren vorteilhaften Ausführungsform ist auf der Messereinrichtung weiter mindestens ein Distanzelement anordenbar, das unter und/oder auf dem Messerelement anordenbar ist und mittels dem Messerschnellverschluss lösbar fixierbar ist. Derartige Distanzelemente sind insbesondere für eine einfache Positionsverstellung der Messerelemente ausgebildet und eingerichtet. Derartige Distanzelemente sind beispielsweise unter dem Begriff Distanzscheiben bekannt. Sofern auf der Messereinrichtung Fixierelemente und/oder Fixierausnehmungen vorgesehen sind, müssen auf den Distanzelementen ebenfalls jeweils korrespondierende Fixierelemente und/oder Fixierausnehmungen vorgesehen sein.

Die Aufgabe wird auch durch die weitere eingangs genannte Vorrichtung zum Verarbeiten von Lebensmittelprodukten, insbesondere zum Verarbeiten von Schlachtkörpern, dadurch gelöst, dass die Vorrichtung zum Lösen und/oder Schneiden nach der Vorrichtung zum Schneiden von Lebensmittelprodukten oder einer bevorzugten Weiterbildung davon ausgebildet und eingerichtet ist. Zur Vermeidung von Wiederholungen wird im Zusammenhang mit der weiteren erfindungsgemäßen Vorrichtung insbesondere auch auf die bereits im Zusammenhang mit der Vorrichtung zum Schneiden von Lebensmittelprodukten im Detail geschilderten Vorzüge verwiesen. Diese gelten in analoger Weise. Besonders bevorzugt handelt es sich bei den Schlachtkörpern um Fische, insbesondere um geschlachtete, in der Bauchhöhle geöffnete und entweidete Fische oder Geflügelschlachtkörper.

Weiterhin wird die Aufgabe durch den eingangs genannten Befestigungsmechanismus dadurch gelöst, dass dieser als erfindungsgemäßer Messerschnellverschluss ausgebildet und eingerichtet ist. Zur Vermeidung von Wiederholungen wird im Zusammenhang mit dem erfindungsgemäßen Befestigungsmechanismus insbesondere auch auf die bereits im Zusammenhang mit der erfindungsgemäßen Vorrichtung im Detail geschilderten Vorzüge verwiesen. Diese gelten in analoger Weise auch für den erfindungsgemäßen Befestigungsmechanismus.

Weitere zweckmäßige und/oder vorteilhafte Merkmale und Weiterbildungen sowie bevorzugte Vorrichtungsgegenstände ergeben sich aus den Unteransprüchen und der Beschreibung. Besonders bevorzugte Ausführungsformen der erfindungsgemäßen Vorrichtungen sowie des erfindungsgemäßen Befestigungsmechanismus werden anhand der beigefügten Zeichnungen näher erläutert. In den Zeichnungen zeigen:
- Fig. 1: eine schematische Darstellung einer ersten Ausführungsform eines Teilabschnitts einer erfindungsgemäßen Vorrichtung mit einem Befestigungsmechanismus in perspektivischer Ansicht,
- Fig. 2: eine schematische Darstellung eines Bereichs der ersten Ausführungsform einer erfindungsgemäßen Vorrichtung in perspektivischer Ansicht,
- Fig. 3: eine schematische Darstellung eines Bereichs der ersten Ausführungsform einer erfindungsgemäßen Vorrichtung im Querschnitt,
- Fig. 4: eine weitere schematische Darstellung eines Bereichs der ersten Ausführungsform der erfindungsgemäßen Vorrichtung im Querschnitt,
- Fig. 5: eine schematische Darstellung eines Bereichs einer zweiten Ausführungsform einer erfindungsgemäßen Vorrichtung mit einem Befestigungsmechanismus in perspektivischer Ansicht,
- Fig. 6: eine schematische Darstellung eines Bereichs der zweiten Ausführungsform der erfindungsgemäßen Vorrichtung im Querschnitt
- und Fig. 7: eine weitere schematische Darstellung eines Bereichs der zweiten Ausführungsform der erfindungsgemäßen Vorrichtung im Querschnitt.

Anhand der vorgenannten Figuren werden die erfindungsgemäßen Vorrichtungen und der erfindungsgemäße Befestigungsmechanismus näher beschrieben.

Die in den Zeichnungen dargestellten Vorrichtungen 10 sind exemplarisch zum Schneiden von Tierprodukten, insbesondere von Fischen, ausgebildet und eingerichtet. Die Vorrichtungen 10 sind jedoch grundsätzlich in gleicher Weise zum Schneiden von weiteren Lebensmittelprodukten 11 (Brot, Käse, Gemüse, Obst etc.) geeignet, wobei ggf. in der Anordnung und/oder in der Positionierung, Dimensionierung oder Ausrichtung einzelner Bauteile entsprechende Modifikationen vorzunehmen sind. Darüber hinaus sind die Vorrichtungen 10 exemplarisch als eigenständige und separate Vorrichtung 10 ausgebildet und eingerichtet. Die Erfindung bezieht sich jedoch in gleicher Weise auf eine vergleichbare Vorrichtung 10, die in einer komplexeren Anlage mit mehreren Baugruppen oder vor- und/oder nachgelagerten weiteren Vorrichtungs- oder Maschinenbestandteilen integriert ist. Derartige Vorrichtungen 10 können insbesondere in der (Maschinen-)Breite und/oder in der Länge variabel ausgebildet und eingerichtet sein, so dass mehrere Lebensmittelprodukte 11 parallel oder in Reihe mittels der Vorrichtung 10 bearbeitet werden können. Anders ausgedrückt können auf einer Vorrichtung 10 eine Mehr- oder Vielzahl an Lebensmittelprodukten 11 parallel oder in Reihe verarbeitet werden, indem die Vorrichtungsbestandteile in der Breite und/oder in der Länge entsprechend angepasst sind. Hierzu sind die vorgesehenen Einrichtungen und die jeweiligen Mittel korrespondierend anzupassen, um eine Skalierbarkeit in der Breite bereitzustellen.

Die vorgesehenen Lebensmittelprodukte 11 werden vorzugsweise mittels einer Anlage be- und/oder verarbeitet, die eine erfindungsgemäße Vorrichtung 10 umfassen kann und/ oder der eine erfindungsgemäße Vorrichtung 10 nachgelagert angeordnet ist. Eine derartige - in den Figuren nicht dargestellte - Anlage umfasst vorzugsweise unterschiedliche Anlagenbestandteile, um die entsprechenden Lebensmittelprodukte 11 mit den vorgesehenen Eigenschaften zu be- und/oder verarbeiten.

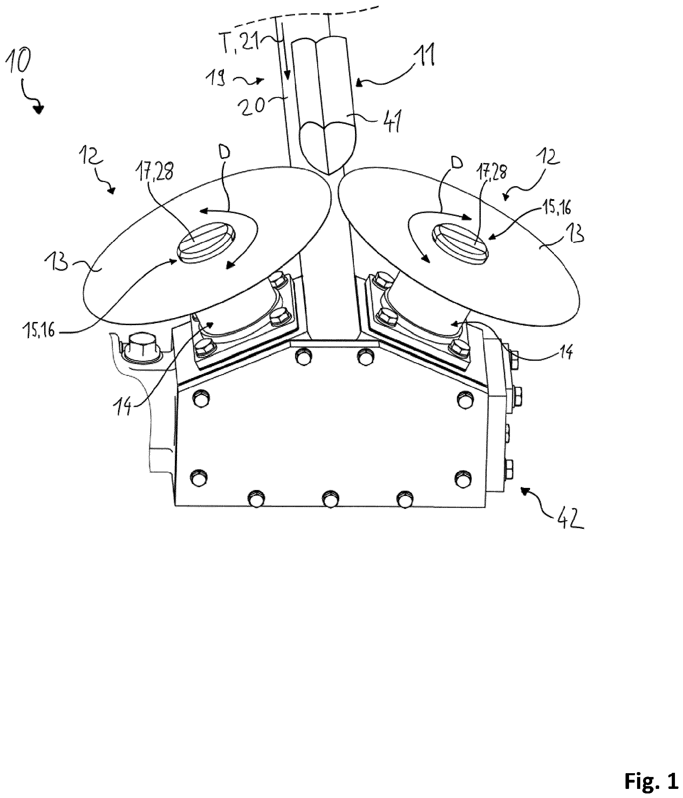

Fig. 1 bis Fig. 4 sowie Fig. 5 bis Fig. 7 zeigen unterschiedliche Ausführungsformen einer erfindungsgemäßen Vorrichtung 10 oder Bestandteilen davon. Die erfindungsgemäße Vorrichtung 10 ist zum Schneiden von Lebensmittelprodukten 11 ausgebildet und eingerichtet und umfasst mindestens eine Messereinrichtung 12 zur lösbaren Anordnung eines Messerelements 13, mindestens eine drehbar gelagerte Messerwelle 14, die zur Aufnahme der Messereinrichtung 12 ausgebildet und eingerichtet ist und mindestens ein - in den Figuren nicht im Detail dargestelltes - Antriebselement, das dazu ausgebildet und eingerichtet ist, die Messerwelle 14 in eine Drehrichtung D anzutreiben. Wie in der Fig. 1 gezeigt, weisen derartige Vorrichtungen 10 oftmals mindestens zwei Messerelemente 13 auf, insbesondere mindestens zwei vollständige Messereinrichtungen 12, die jeweils zum eigenständigen Schneiden von Lebensmittelprodukten 11 ausgebildet und eingerichtet sind.

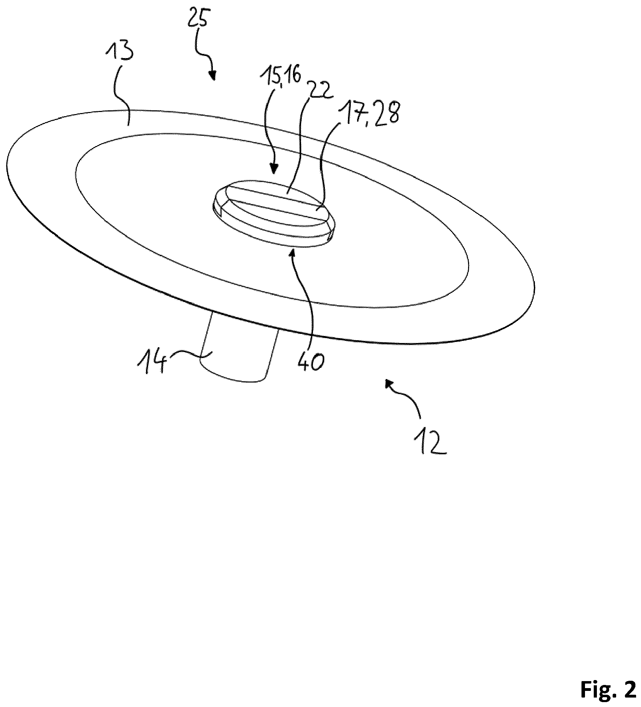

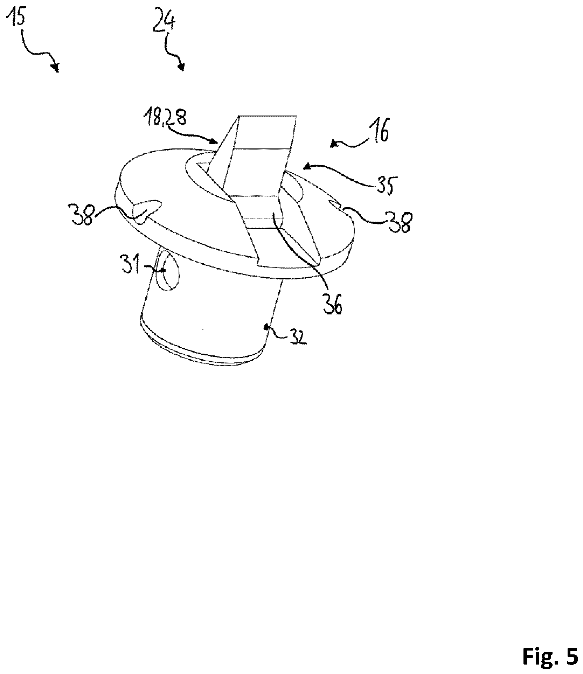

Die Vorrichtung 10 zeichnet sich erfindungsgemäß dadurch aus, dass die Messereinrichtung 12 einen Befestigungsmechanismus 15 zur lösbaren Befestigung eines Messerelementes 13 auf der Messerwelle 14 umfasst, wobei der Befestigungsmechanismus 15 als Messerschnellverschluss 16 ausgebildet und eingerichtet ist. In den Fig. 2 bis Fig. 4 sind exemplarisch Ausschnitte bzw. Detailansichten einer ersten Ausführungsform eines entsprechenden Befestigungsmechanismus 15 bzw. einer Vorrichtung 10 dargestellt, der als Messerschnellverschluss 16 ausgebildet und eingerichtet ist, bzw. die einen Messerschnellverschluss 16 umfasst. Die erste Ausführungsform des Messerschnellverschlusses 16 ist durch ein Schiebeelement 17 gekennzeichnet. In den Fig. 5 bis Fig. 7 ist eine weitere Ausführungsform eines entsprechenden Befestigungsmechanismus 15 dargestellt, der ebenfalls als Messerschnellverschluss 16 ausgebildet und eingerichtet ist und ein Hebelelement 18 aufweist. Grundsätzlich sind derartige Messerschnellverschlüsse 16 zur Anordnung mindestens eines Messerelementes 13 auf einer Messereinrichtung 12 ausgebildet und eingerichtet. Durch die Messerschnellverschlüsse 16 ist eine zuverlässige und schnelle Austauschbarkeit der entsprechenden Messerelemente 13 gewährleistet. Für derartige Messerschnellverschlüsse 16 ist vorzugsweise kein (Spezial-)Werkzeug erforderlich, um eine Bedienbarkeit zu gewährleisten. Weiter bevorzugt ist eine händische Bedienung der Messerschnellverschlüsse 16 gegeben, indem das Schiebeelement 17 verschoben wird oder das Hebelelement 18 entsprechend auf- oder zugeklappt wird.

Wie in der Fig. 1 gezeigt ist, ist bei bevorzugten Ausführungsformen der erfindungsgemäßen Vorrichtungen 10 zum Transport bzw. zum Vortrieb der Lebensmittelprodukte 11 mindestens eine Transporteinrichtung 19 mit mindestens einem Transportelement 20 vorgesehen, um die Lebensmittelprodukte 11 entlang einer Transportstrecke 21 in eine Transportrichtung T zu transportieren. Die Lebensmittelprodukte 11 werden auf diese Weise der Messereinrichtung 12 zugeführt, um ein entsprechendes Schneiden mittels des mindestens einen Messerelementes 13 auszubilden und einzurichten. In weiteren bevorzugten Ausführungsformen können zusätzliche Mittel und/oder Halteelemente vorgesehen sein, um ein Halten und/oder Positionieren der Lebensmittelprodukte 11 auszubilden und einzurichten. In den Fig. 2 bis Fig. 7 sind jeweils Ausschnitte zweier unterschiedlicher Ausführungsformen der erfindungsgemäßen Vorrichtung 10 detailliert dargestellt, wobei insbesondere Detailansichten oder einzelne Bauteile der Messereinrichtung 12 gezeigt sind.

In den Fig. 1 bis Fig. 7 ist gezeigt, dass die Messereinrichtung 12 vorzugsweise einen Messergrundkörper 22 umfasst, wobei der Messergrundkörper 22 mittels des Messerschnellverschlusses 16 in mindestens einer die Messerwelle 14 aufweisenden Ausnehmung 23 lösbar anordenbar ausgebildet und eingerichtet ist, um mindestens ein Messerelement 13 lösbar zu fixieren. Wie in den Figuren gezeigt, ist auf einer einzigen Messerwelle 14 einer Messereinrichtung 12 bevorzugt jeweils nur ein Messerelement 13 anordenbar. In weiteren - in den Figuren nicht gezeigten Ausführungsformen - kann es zweckdienlich sein, wenn auf einer Messerwelle 14 eine Mehr- und/oder Vielzahl an Messerelementen 13 anordenbar sind. Die mindestens eine Messerwelle 14 ist vorzugsweise in beide Richtungen drehbar sowie bevorzugt antreibbar ausgebildet und eingerichtet. Mittels des Messerschnellverschlusses 16 sind die Messerelemente 13 unabhängig von der eingesetzten Fixierung in beide Drehrichtungen D rotierbar ausgebildet und eingerichtet. Wie in den Figuren dargestellt, ist das Messerelement 13 weiter bevorzugt als Kreismesser ausgebildet und eingerichtet.

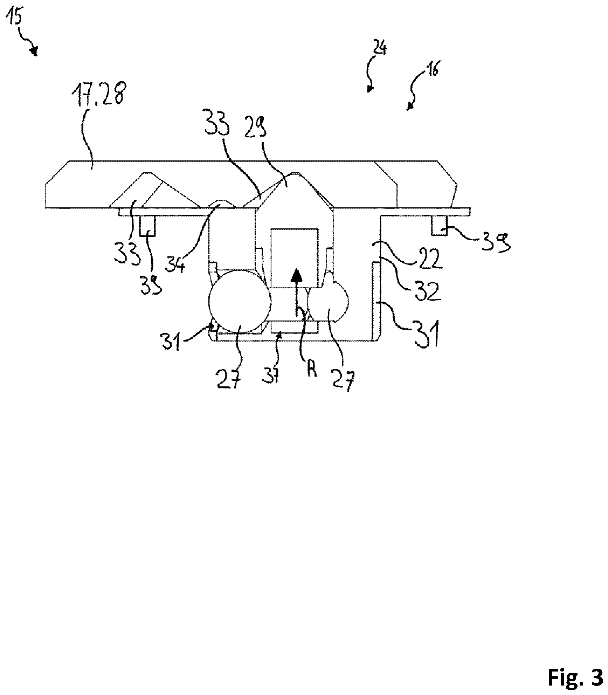

In einer vorteilhaften, in den Fig. 1 bis Fig. 7 dargestellten Ausführungsform ist der Messerschnellverschluss 16 zumindest zwischen einer geöffneten Position 24 und einer geschlossenen Position 25 veränderlich ausgebildet und eingerichtet, wobei der Messerschnellverschluss 16 in der geschlossenen Position 25 das Messerelement 13 gegen ein selbsttätiges Lösen fixiert. In den Fig. 3, Fig. 5 und Fig. 6 sind die jeweiligen Messerschnellverschlüsse 16 jeweils in einer geöffneten Position 24 gezeigt, während in den Fig. 1, Fig. 2, Fig. 4 sowie Fig. 7 die Messerschnellverschlüsse 16 jeweils in der geschlossenen Position 25 gezeigt sind. Durch die Veränderbarkeit des mindestens einen Messerschnellverschlusses 16 aus der geöffneten Position 24 in die geschlossene Position 25 ist das Messerelement 13 lösbar auf der Messerwelle 14 fixierbar und für das bestimmungsgemäße Schneiden der Lebensmittelprodukte 11 einsetzbar. Der Messerschnellverschluss 16 verhindert auf diese Weise, dass sich das Messerelement 13 von der Messerwelle 14 löst, um ein zuverlässiges Schneiden auszubilden und einzurichten. Um ein beabsichtigtes Lösen des Messerelementes 13 auszubilden und einzurichten, ist der Messerschnellverschluss 16 von der geschlossenen Position 25 in die geöffnete Position 24 veränderbar, um das Messerelement 13 von der Messerwelle 14 freizugeben.

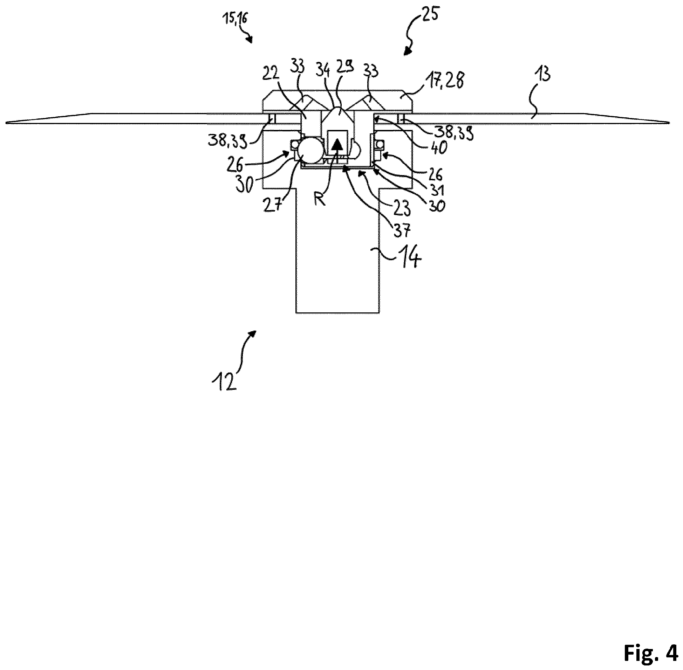

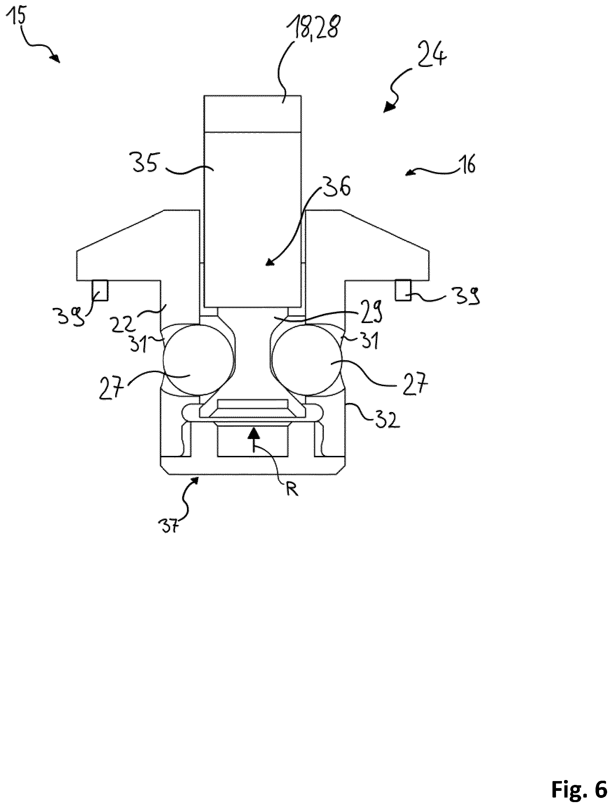

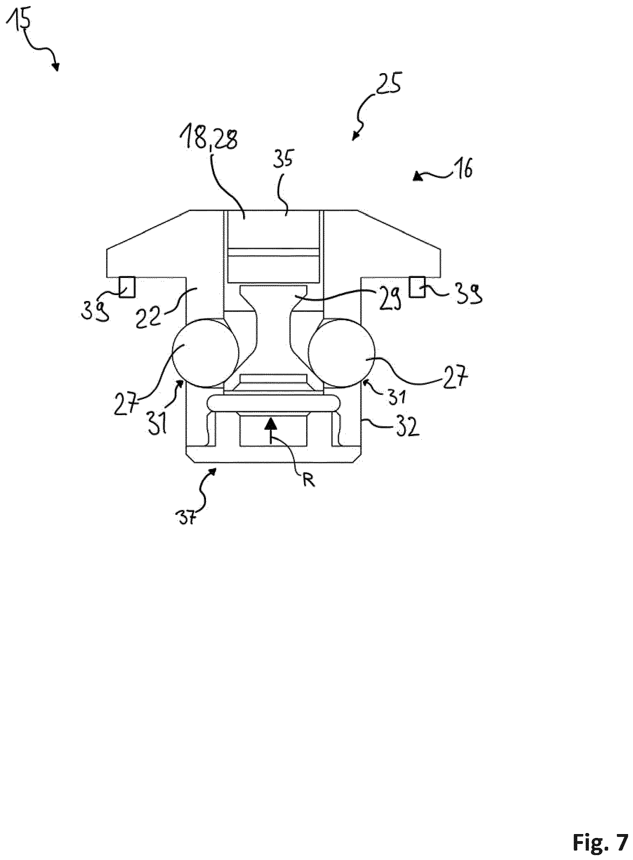

Ein bestimmungsgemäßer Einsatz des Messerschnellverschlusses 16 bei der erfindungsgemäßen Vorrichtung 10 ist beispielhaft durch die Fig. 3 und die Fig. 4 sowie durch die Fig. 6 und die Fig. 7 verdeutlicht, indem die beiden Positionen 24, 25 des Messerschnellverschlusses 16 dargestellt sind. Sofern die Vorrichtung 10 ohne Messerelement 13 sowie ohne angeordneten Messerschnellverschluss 16 ausgestattet ist, liegt die Messerwelle 14 mit ihrer Ausnehmung 23 vor. In der Ausnehmung 23 ist der Messergrundkörper 22 anordenbar, um das Messerelement 13 auf der Messerwelle 14 mittels des Messerschnellverschlusses 16 lösbar zu befestigen. Das Messerelement 13 weist bevorzugt in der Mitte mindestens eine Durchbrechung 40 auf, die zum Durchgreifen mit dem Messerschnellverschluss 16 vorgesehen ist. Die Durchbrechung 40 ist auf der Messerwelle 14 positionierbar, während der Messerschnellverschluss 16 durch die Durchbrechung 40 hindurchgreift, um den Messergrundkörper 22 in der Ausnehmung 23 der Messerwelle 14 anzuordnen und entsprechend zu befestigen.

In einer weiteren bevorzugten Ausführungsform umfasst der Messerschnellverschluss 16 mindestens ein Arretierelement 28 und mindestens ein Übertragungselement 29, wobei das mindestens eine Arretierelement 28 zur Positionsveränderung des Messerschnellverschlusses 16 zumindest zwischen der geöffneten Position 24 und der geschlossenen Position 25 ausgebildet und eingerichtet ist, indem das mindestens eine Arretierelement 28 derart mit dem mindestens einen Übertragungselement 29 in Wirkverbindung steht, dass es eine Positionsveränderung des mindestens einen Übertragungselements 29 ausbildet und einrichtet. Insbesondere in den Schnittansichten der Fig. 3, Fig. 4 sowie Fig. 6, Fig. 7 ist ein Arretierelement 28 sowie ein Übertragungselement 29 dargestellt, die zur Ausbildung einer Positionsveränderung bewegbar ausgebildet und eingerichtet ist. Das Übertragungselement 29 ist dazu bevorzugt axial beweglich ausgebildet und eingerichtet, wobei durch eine Anlage des Arretierelementes 28 an das Übertragungselement 29 die Positionsveränderung des Messerschnellverschlusses 16 erzeugbar ist. In den Fig. 3 und Fig. 4 ist jeweils eine Ausführungsform eines Arretierelementes 28 gezeigt, das mittels einer Verschiebung positionsbeweglich ist, wobei das Arretierelement 28 der Fig. 6 und der Fig. 7 durch eine Hebelbewegung eine Positionsveränderung ausbildet und einrichtet.

Eine vorteilhafte Ausführungsform zeichnet sich dadurch aus, dass die Ausnehmung 23 der Messerwelle 14 mindestens eine Eingriffsausnehmung 26 aufweist, und dass der Messergrundkörper 22 mindestens ein Eingriffselement 27 zum Eingriff mit der Eingriffsausnehmung 26 umfasst, wobei das Eingriffselement 27 in der geschlossenen Position 25 des Messerschnellverschlusses 16 kraftschlüssig und/oder formschlüssig im Eingriff mit der mindestens einen Eingriffsausnehmung 26 ausgebildet und eingerichtet ist und wobei das mindestens eine Eingriffselement 27 in der geöffneten Position 24 des Messerschnellverschlusses 16 im Wesentlichen eingriffsfrei mit der mindestens einen Eingriffsausnehmung 26 ausgebildet und eingerichtet ist. Insbesondere in der Schnittansicht der Fig. 4 sind die jeweiligen Eingriffsausnehmungen 26 sowie die Eingriffselemente 27 zueinander gezeigt. In dem ersten erfindungsgemäßen Ausführungsbeispiel der Fig. 3 befindet sich der Messerschnellverschluss 16 in der geöffneten Position 24 und in der Fig. 1, Fig. 2 und Fig. 4 ist der Messerschnellverschluss 16 in der geschlossenen Position 25 angeordnet, wobei das mindestens eine Eingriffselement 27, wie in der Fig. 3 gezeigt ist, im Wesentlichen eingriffsfrei ausgebildet und eingerichtet ist und in der Fig. 4 ist das mindestens eine Eingriffselement 27 zumindest bereichsweise in der mindestens einen Eingriffsausnehmung 26 angeordnet. In der Schnittansicht des zweiten Ausführungsbeispiels der Fig. 7 ist das mindestens eine Eingriffselement 27 ebenfalls zumindest bereichsweise außerhalb des Messergrundkörpers 22, um in der mindestens einen Eingriffsausnehmung 26 angeordnet zu werden.

Vorzugsweise ist das mindestens eine Übertragungselement 29 derart mit dem mindestens einen Eingriffselement 27 in Wirkverbindung bringbar, dass das mindestens eine Übertragungselement 29 bei einer Positionsveränderung einen kraftschlüssigen und/oder formschlüssigen Eingriff des mindestens einen Eingriffselements 27 in die mindestens eine Eingriffsausnehmung 26 ausbildet und einrichtet oder dass das mindestens eine Übertragungselement 29 eine Freigabe des mindestens einen Eingriffselements 27 aus der mindestens einen Eingriffsausnehmung 26 ermöglicht, wobei insbesondere bei einer geöffneten Position 24 des Messerschnellverschlusses 16 eine Freigabe des mindestens einen Eingriffselements 27 aus der mindestens einen Eingriffsausnehmung 26 vorgesehen ist und bei einer geschlossenen Position 25 des Messerschnellverschlusses 16 ein Eingriff des mindestens einen Eingriffselements 27 mit der mindestens einen Eingriffsausnehmung 26 vorgesehen ist. Insbesondere in der Schnittansichten der Fig. 3 bis Fig. 7 ist die jeweilige Positionsveränderung des mindestens einen Übertragungselements 29 in Verbindung mit dem mindestens einen Eingriffselement 27 dargestellt, wobei jeweils ein Eingriff oder eine Freigabe des mindestens einen Eingriffselements 27 mit der Eingriffsausnehmung 26 vorgesehen ist. In dem ersten erfindungsgemäßen Ausführungsbeispiel der Fig. 3 sowie Fig. 5 und Fig. 6 ist das mindestens eine Eingriffselement 27 im Wesentlichen eingriffsfrei mit der mindestens einen Eingriffsausnehmung 26 ausgebildet und eingerichtet. In der Fig. 4 ist das mindestens eine Übertragungselement 29 zumindest bereichsweise in Eingriff mit dem mindestens einen Eingriffsauselement 27, wobei eine kraft- und/ oder formschlüssige Verbindung ausgebildet wird, um das mindestens eine Messerelement 13 auf der Messerwelle 14 fixiert anzuordnen. In der Schnittansicht des zweiten Ausführungsbeispiels der Fig. 7 ist das mindestens eine Eingriffselement 27 ebenfalls zumindest bereichsweise in der mindestens einen Eingriffsausnehmung 26 anordenbar, um einen kraftschlüssigen und/oder formschlüssigen Eingriff des mindestens einen Eingriffselements 27 in die mindestens eine Eingriffsausnehmung 26 auszubilden und einzurichten, was durch die Positionsveränderung des Übertragungselements 29 steuerbar ist. In bevorzugten Ausführungsformen ist die mindestens eine Eingriffsausnehmung 26 auf der Innenwandung 30 der Ausnehmung 23 der Messerwelle 14 ausgebildet und eingerichtet, insbesondere umlaufend ausgebildet und eingerichtet. In der Fig. 4 ist in der Schnittansicht die mindestens eine Eingriffsausnehmung 26 bevorzugt auf der Innenwandung 30 umlaufend als eine einzige Eingriffsausnehmung 26 ausgebildet und eingerichtet. In weiteren bevorzugten - in den Figuren nicht im Detail dargestellten - Ausführungsformen können mindestens die Anzahl an Eingriffsausnehmungen 26 vorgesehen sein, die der Anzahl der Eingriffselemente 27 entsprechen, insbesondere sofern die Eingriffsausnehmung 26 nicht als eine einzige umlaufende Eingriffsausnehmung 26 ausgebildet und eingerichtet ist. Alternativ oder ergänzend kann die mindestens eine Eingriffsausnehmung 26 zum Eingriff mit mehreren Eingriffselementen 27 ausgebildet und eingerichtet sein.

Vorzugsweise sind das mindestens eine Eingriffselement 27 und die mindestens eine Eingriffsausnehmung 26 zumindest abschnittsweise korrespondierend zueinander ausgebildet und eingerichtet, insbesondere derart, dass in der geschlossenen Position 25 des Messerschnellverschlusses 16 eine kraftschlüssige und/oder formschlüssige Verbindung zwischen dem mindestens einen Eingriffselement 27 und der mindestens einen Eingriffsausnehmung 26 vorgesehen ist. Das mindestens eine Eingriffselement 27 und die mindestens eine Eingriffsausnehmung 26 sind, wie in der Fig. 4 gezeigt, dann zumindest im Wesentlichen abschnittsweise korrespondierend zueinander ausgebildet und eingerichtet, wenn das mindestens eine Eingriffselement 27 und die mindestens eine Eingriffsausnehmung 26 zumindest abschnittsweise im Wesentlichen den Abmessungen (positiv/negativ) entspricht. Hierbei ist jedoch bevorzugt das Eingriffselement 27 zumindest geringfügig kleiner als die Eingriffsausnehmung 26 ausgebildet und eingerichtet.

In weiteren bevorzugten Ausführungsformen sind mindestens zwei bis sieben Eingriffselemente 27 vorgesehen, besonders bevorzugt drei bis fünf Eingriffselemente 27. Die Messerschnellverschlüsse 16 der Fig. 1 bis Fig. 7 weisen besonders bevorzugt drei Eingriffselemente 27 auf, die sternförmig entlang des Umfangs des Messergrundkörpers 22 angeordnet sind. Durch die sternförmige Anordnung ist eine möglichst gleichmäßige Kraftverteilung gegeben. Weiter bevorzugt ist das mindestens eine Eingriffselement 27 derart innerhalb des Messergrundkörpers 22 anordenbar, dass es beweglich, aber verliersicher ausgebildet und eingerichtet ist, was insbesondere durch die Fig. 6 und Fig. 7 verdeutlicht wird. In den Fig. 5 bis Fig. 7 ist jeweils ein Eingriffselement 27 gezeigt, das innerhalb des Messergrundkörpers 22 innenliegend angeordnet ist und dabei durch eine Durchbrechung 31 zumindest bereichsweise in Richtung der Außenfläche 32 bewegbar ist. Besonders bevorzugt ist die Durchbrechung 31 der Außenfläche 32 kleiner, als das mindestens eine Eingriffselement 27, um ein Verlieren, das heißt ein vollständiges Durchdringen der Durchbrechung 31, zu verhindern.

In einer bevorzugten Ausführungsform ist das mindestens eine Eingriffselement 27 und/oder die mindestens eine Eingriffsausnehmung 26 zumindest bereichsweise mit einer - in den Figuren nicht im Detail dargestellten - elastischen Schicht überzogen, das z. B. aus einem elastischen Material wie Gummi oder Silikon ausgewählt ist. Auf diese Weise ist ein hygienischer sowie kraftschlüssiger Eingriff durch das mindestens eine Eingriffselemente 27 gegeben. Die elastische Schicht stellt eine größere kraftschlüssige Komponente dar, wodurch beispielsweise eine geringere Eingriffstiefe mit der mindestens einen Eingriffsausnehmung 26 bereitgestellt werden muss. In einer weiter bevorzugten Ausführungsform weist die mindestens eine Eingriffsausnehmung 26 und/oder das mindestens eine Eingriffselement 27 mindestens einen O-Ring oder einen dünnen Federstahl auf, um eine zusätzliche Eingriffskomponente auszubilden und einzurichten.

Vorzugsweise ist das Arretierelement 28 mit dem Messergrundkörper 22 verbunden, insbesondere verliersicher verbunden. Das Arretierelement 28 ist beispielsweise durch eine gelenkige Verbindung, wie in den Fig. 5 bis Fig. 7 gezeigt, mit dem Messergrundkörper 22 verbunden. Wie in der ersten Ausführungsform der Fig. 3 und Fig. 4 dargestellt ist, ist das Arretierelement 28 weiter bevorzugt als zumindest zwischen einer geöffneten Position 24 und einer geschlossenen Position 25 schiebbewegliches Schiebeelement 17 ausgebildet und eingerichtet, wobei bei einem Verschieben des Schiebeelements 17 zumindest ein Wechsel zwischen der geöffneten Position 24 und der geschlossenen 25 Position ausgebildet und eingerichtet ist. Das Schiebeelement 17 umfasst in einer bevorzugten Ausführung mindestens zwei Schiebeausnehmungen 33, 34, die zum zumindest bereichsweisen Eingriff mit dem Übertragungselement 29 ausgebildet und eingerichtet sind, wobei mindestens eine der Schiebeausnehmungen 34 einen geringeren Eingriff mit dem Übertragungselement 29 ausbildet und einrichtet. Das Schiebeelement der Fig. 1 bis Fig. 4 weist drei Schiebeausnehmungen 33, 34 auf, wobei zwei der Schiebeausnehmungen 33 jeweils einen im Wesentlichen gleichen Eingriff mit dem Übertragungselement 29 ermöglichen und wobei zwischen den Schiebeausnehmungen 33 die Schiebeausnehmung 34 angeordnet ist, die einen geringeren Eingriff mit dem Übertragungselement 29 ermöglicht, die dazu eine kleinere Ausnehmung aufweist. Das Schiebeelement 17 der Fig. 1 bis Fig. 4 ist vorzugsweise jeweils in beide Richtung schiebbeweglich ausgebildet und eingerichtet, wobei bei einer Anordnung des Übertragungselements 29 in den größeren Schiebeausnehmungen 33 jeweils eine Freigabe des Eingriffselements 27 aus der Eingriffsausnehmung 26 ermöglicht ist.

In der bevorzugten Ausführungsform der Fig. 6 und Fig. 7 ist das Arretierelement 28 als zumindest zwischen einer geöffneten Position 24 und einer geschlossenen Position 25 bewegbares Hebelelement 18 ausgebildet und eingerichtet, wobei bei einem Betätigen des Hebelelements 18 zumindest ein Wechsel zwischen der geöffneten Position 24 und der geschlossenen Position 25 ausgebildet und eingerichtet ist. Vorzugsweise ist das Hebelelement 18 als Exzenterhebel 35 ausgebildet und eingerichtet, wobei ein Betätigungsabschnitt 36 des Exzenterhebels 35 in der geschlossenen Position 25 in Wirkverbindung mit dem Übertragungselement 29 bringbar ist, und wobei der Betätigungsabschnitt 36 des Exzenterhebels 35 in der geöffneten Position 24 das Übertragungselement 29 freigibt. Das Übertragungselement 29 ist insbesondere derart freigebbar, dass das die kraft- und/oder formschlüssige Verbindung zwischen dem mindestens einen Eingriffselement 27 und der mindestens einen Eingriffsausnehmung 26 umkehrbar ist.

In einer weiteren bevorzugten Ausführungsform umfasst die Messereinrichtung 12 mindestens ein Rückstellelement 37, das dazu ausgebildet und eingerichtet ist, auf das Übertragungselement 29 eine dieses in die oder in Richtung des Messerschnellverschlusses 16 bewegende Rückstellkraft R auszuüben. Die Rückstellkraft R ist weiter bevorzugt mittels eines - in den Figuren nicht im Detail gezeigten - Federelements und/oder mittels einer Magneteinheit bereitstellbar. In den Fig. 3, Fig. 4 sowie Fig. 6 und Fig. 7 sind jeweils ein Befestigungsmechanismus 15 mit einem Rückstellelement 37 dargestellt. Das Mittel zur Erzeugung der Rückstellkraft R ist besonders bevorzugt in dem Messergrundkörper 22 innenliegend angeordnet. Die Rückstellkraft R bewirkt, dass das Übertragungselement 29 axial, insbesondere in Verlauf der Messerwelle 14, nach außen verschiebbar ist. Bei einem beispielsweisen Betätigen des Messerschnellverschlusses 16 und Überführen von der geöffneten Position 24 in die geschlossene Position 25 ist das Übertragungselement 29 gegen die Rückstellkraft R bewegbar. Bei einem Wechsel des Zustandes des Messerschnellverschlusses 16 und Überführen von der geschlossenen Position 25 in die geöffnete Position 24 verschiebt sich das Übertragungselement 29 mit der Rückstellkraft R in Richtung der Außenseite der Messereinrichtung 12.

In weiteren bevorzugten Ausführungsformen umfasst das Messerelement 13 mindestens eine Fixierausnehmung 38 und die Messereinrichtung 12 umfasst mindestens ein zumindest abschnittsweise mit der mindestens einen Fixierausnehmung 38 korrespondierendes Fixierelement 39, wodurch das Messerelement 13 mittels des Messerschnellverschlusses 16 formschlüssig und gegenüber der Messerwelle 14 verdrehfest auf der Messereinrichtung 12 fixiert anordenbar ist. In den Fig. 3, Fig. 4, Fig. 6 und Fig. 7 weist der Befestigungsmechanismus 15 jeweils die Fixierelemente 39 auf. In weiteren vorteilhaften - in den Figuren nicht gezeigten - Ausführungsformen umfasst die Messerwelle 14 mindestens eine Fixierausnehmung 38 und/oder mindestens ein Fixierelement 39.

In einer weiteren bevorzugten Ausführungsform ist eine Vorrichtung zum Verarbeiten von Lebensmittelprodukten 11, insbesondere zum Verarbeiten von Schlachtkörpern 41, vorgesehen. Die weitere bevorzugte Vorrichtung zum Verarbeiten von Lebensmittelprodukten 11 umfasst eine Transporteinrichtung 19, die eine Transporteinheit aufweisen kann, und diese ist ausgebildet und eingerichtet zum Transportieren der Lebensmittelprodukte 11 in Transportrichtung T entlang einer Transportstrecke 21, die anders ausgedrückt einen Transportpfad darstellt. Die Lebensmittelprodukte 11 sind durch mindestens eine Bearbeitungsstation 42 zum Verarbeiten der Schlachtkörper 41, nämlich eine Vorrichtung 10 zum Lösen und/oder Schneiden von Fleisch oder Schlachtkörperbestandteilen von einem Schlachtkörper 41 oder Teilen davon ausgebildet und eingerichtet, die mindestens eine erfindungsgemäße Messereinrichtung 12 mit einem Messerschnellverschluss 16 umfasst. Derartige Vorrichtungen sind besonders bevorzugt zum Verarbeiten von geschlachteten und ausgeweideten Fischen 41 geeignet, obwohl ebenfalls beispielsweise Geflügelschlachtkörper oder dergleichen mittels derartiger Vorrichtungen bearbeitbar sind, wobei beispielsweise ggf. Anpassungen der Transporteinrichtung 19 oder der Messereinrichtung 12 vorzunehmen sind.

## Patentansprüche

1. Vorrichtung (10) zum Schneiden von Lebensmittelprodukten (11), umfassend mindestens eine Messereinrichtung (12) zur lösbaren Anordnung eines Messerelements (13),
mindestens eine drehbar gelagerte Messerwelle (14), die zur Aufnahme der Messereinrichtung (12) ausgebildet und eingerichtet ist,
mindestens ein Antriebselement, das dazu ausgebildet und eingerichtet ist, die Messerwelle (14) in eine Drehrichtung (D) anzutreiben,
**dadurch gekennzeichnet, dass**
die Messereinrichtung (12) einen Befestigungsmechanismus (15) zur lösbaren Befestigung eines Messerelementes (13) auf der Messerwelle (14) umfasst, wobei der Befestigungsmechanismus (15) als Messerschnellverschluss (16) ausgebildet und eingerichtet ist.

2. Vorrichtung (10) nach Anspruch 1, **dadurch gekennzeichnet, dass** die Messereinrichtung (12) einen Messergrundkörper (22) umfasst, wobei der Messergrundkörper (22) mittels des Messerschnellverschlusses (16) in mindestens einer die Messerwelle (14) aufweisenden Ausnehmung (23) lösbar anordenbar ausgebildet und eingerichtet ist, um mindestens ein Messerelement (13) lösbar zu fixieren.

3. Vorrichtung (10) nach Anspruch 1 oder 2, **dadurch gekennzeichnet, dass** der Messerschnellverschluss (16) zumindest zwischen einer geöffneten Position (24) und einer geschlossenen Position (25) veränderlich ausgebildet und eingerichtet ist, wobei der Messerschnellverschluss (16) das Messerelement (13) in der geschlossenen Position (25) gegen ein selbsttätiges Lösen fixiert.

4. Vorrichtung (10) nach Anspruch 3, **dadurch gekennzeichnet, dass** die Ausnehmung (23) der Messerwelle (14) mindestens eine Eingriffsausnehmung (26) aufweist, und dass der Messergrundkörper (22) mindestens ein Eingriffselement (27) zum Eingriff mit der Eingriffsausnehmung (26) umfasst, wobei das Eingriffselement (27) in der geschlossenen Position (25) des Messerschnellverschlusses (16) kraftschlüssig und/oder formschlüssig im Eingriff mit der mindestens einen Eingriffsausnehmung (26) ausgebildet und eingerichtet ist und wobei das mindestens eine Eingriffselement (27) in der geöffneten Position (24) des Messerschnellverschlusses (16) im Wesentlichen eingriffsfrei mit der mindestens einen Eingriffsausnehmung (26) ausgebildet und eingerichtet ist.

5. Vorrichtung (10) nach Anspruch 4, **dadurch gekennzeichnet, dass** der Messerschnellverschluss (16) mindestens ein Arretierelement (28) und mindestens ein Übertragungselement (29) umfasst, wobei das mindestens eine Arretierelement (28) zur Positionsveränderung des Messerschnellverschlusses (16) zumindest zwischen der geöffneten Position (24) und der geschlossenen Position (25) ausgebildet und eingerichtet ist, indem das mindestens eine Arretierelement (28) derart mit dem mindestens einen Übertragungselement (29) in Wirkverbindung steht, dass es eine Positionsveränderung des mindestens einen Übertragungselements (29) ausbildet und einrichtet.

6. Vorrichtung (10) nach Anspruch 5, **dadurch gekennzeichnet, dass** das mindestens eine Übertragungselement (29) derart mit dem mindestens einen Eingriffselement (27) in Wirkverbindung bringbar ist, dass das mindestens eine Übertragungselement (29) bei einer Positionsveränderung einen kraftschlüssigen und/oder formschlüssigen Eingriff des mindestens einen Eingriffselements (27) in die mindestens eine Eingriffsausnehmung (26) ausbildet und einrichtet oder dass das mindestens eine Übertragungselement (29) eine Freigabe des mindestens einen Eingriffselements (27) aus der mindestens einen Eingriffsausnehmung (26) ermöglicht, wobei insbesondere bei einer geöffneten Position (24) des Messerschnellverschlusses (16) eine Freigabe des mindestens einen Eingriffselements (27) aus der mindestens einen Eingriffsausnehmung (26) vorgesehen ist und bei einer geschlossenen Position (25) des Messerschnellverschlusses (16) ein Eingriff des mindestens einen Eingriffselements (27) mit der mindestens einen Eingriffsausnehmung (26) vorgesehen ist.

7. Vorrichtung (10) nach einem oder mehreren der Ansprüche 4 bis 6, **dadurch gekennzeichnet, dass** die mindestens eine Eingriffsausnehmung (26) auf der Innenwandung (30) der Ausnehmung (23) der Messerwelle (14) ausgebildet und eingerichtet ist, insbesondere umlaufend ausgebildet und eingerichtet ist.

8. Vorrichtung (10) nach einem oder mehreren der Ansprüche 4 bis 7, **dadurch gekennzeichnet, dass** mindestens zwei bis sieben Eingriffselemente (27) vorgesehen sind, besonders bevorzugt drei bis fünf Eingriffselemente (27).

9. Vorrichtung (10) nach einem oder mehreren der Ansprüche 4 bis 8, **dadurch gekennzeichnet, dass** das mindestens eine Eingriffselement (27) und die mindestens eine Eingriffsausnehmung (26) zumindest abschnittsweise korrespondierend zueinander ausgebildet und eingerichtet sind, insbesondere derart, dass in der geschlossenen Position (25) des Messerschnellverschlusses (16) eine kraftschlüssige und/oder formschlüssige Verbindung zwischen dem mindestens einen Eingriffselement (27) und der mindestens einen Eingriffsausnehmung (26) vorgesehen ist.

10. Vorrichtung (10) nach einem oder mehreren der Ansprüche 4 bis 9, **dadurch gekennzeichnet, dass** das mindestens eine Eingriffselement (27) derart innerhalb des Messergrundkörpers (22) anordenbar ist, dass es beweglich, aber verliersicher ausgebildet und eingerichtet ist.

11. Vorrichtung (10) nach einem oder mehreren der Ansprüche 5 bis 10, **dadurch gekennzeichnet, dass** das Arretierelement (28) mit dem Messergrundkörper (22) verbunden ist, insbesondere verliersicher verbunden ist.

12. Vorrichtung (10) nach einem oder mehreren der Ansprüche 5 bis 11, **dadurch gekennzeichnet, dass** das Arretierelement (28) als zumindest zwischen einer geöffneten Position (24) und einer geschlossenen Position (25) schiebbewegliches Schiebeelement (17) ausgebildet und eingerichtet ist, wobei bei einem Verschieben des Schiebeelements (17) zumindest ein Wechsel zwischen der geöffneten Position (24) und der geschlossenen Position (25) ausgebildet und eingerichtet ist.

13. Vorrichtung (10) nach Anspruch 12, **dadurch gekennzeichnet, dass** das Schiebeelement (17) mindestens zwei Schiebeausnehmungen (33, 34) umfasst, die zum zumindest bereichsweisen Eingriff mit dem Übertragungselement (29) ausgebildet und eingerichtet sind, wobei mindestens eine der Schiebeausnehmungen (34) einen geringeren Eingriff mit dem Übertragungselement (29) ausbildet und einrichtet.

14. Vorrichtung (10) nach einem oder mehreren der Ansprüche 5 bis 11, **dadurch gekennzeichnet, dass** das Arretierelement (28) als zumindest zwischen einer geöffneten Position (24) und einer geschlossenen Position (25) bewegbares Hebelelement (18) ausgebildet und eingerichtet ist, wobei bei einem Betätigen des Hebelelements (18) zumindest ein Wechsel zwischen der geöffneten Position (24) und der geschlossenen Position (25) ausgebildet und eingerichtet ist.

15. Vorrichtung (10) nach Anspruch 14, **dadurch gekennzeichnet, dass** das Hebelelement (18) als Exzenterhebel ausgebildet und eingerichtet ist, wobei ein Betätigungsabschnitt (36) des Exzenterhebels in der geschlossenen Position (25) in Wirkverbindung mit dem Übertragungselement (29) bringbar ist, und wobei der Betätigungsabschnitt (36) des Exzenterhebels (35) in der geöffneten Position (24) das Übertragungselement (29) freigibt.

16. Vorrichtung nach einem oder mehreren der Ansprüche 5 bis 15, **dadurch gekennzeichnet, dass** die Messereinrichtung mindestens ein Rückstellelement umfasst, das dazu ausgebildet und eingerichtet ist, auf das Übertragungselement eine dieses in die oder in Richtung des Messerschnellverschlusses bewegende Rückstellkraft auszuüben.

17. Vorrichtung (10) nach einem oder mehreren der Ansprüche 1 bis 16, **dadurch gekennzeichnet, dass** das Messerelement (13) mindestens eine Fixierausnehmung (38) umfasst und dass die Messereinrichtung (12) mindestens ein zumindest abschnittsweise mit der mindestens einen Fixierausnehmung (38) korrespondierendes Fixierelement (39) umfasst, wodurch das Messerelement (13) mittels des Messerschnellverschlusses (16) formschlüssig und gegenüber der Messerwelle (14) verdrehfest auf der Messereinrichtung (12) fixiert anordenbar ist.

18. Vorrichtung (10) zum Verarbeiten von Lebensmittelprodukten (11), insbesondere zum Verarbeiten von Schlachtkörpern (41), umfassend eine Transporteinheit (19), ausgebildet und eingerichtet zum Transportieren der Lebensmittelprodukte (11) in Transportrichtung T entlang eines Transportpfads (21) durch mindestens eine Bearbeitungsstation (42) zum Verarbeiten der Schlachtkörper (41), nämlich eine Vorrichtung (10) zum Lösen und/oder Schneiden von Fleisch oder Schlachtkörperbestandteilen von einem Schlachtkörper (41) oder Teilen davon, **dadurch gekennzeichnet, dass**
die Vorrichtung (10) zum Lösen und/oder Schneiden nach einem oder mehreren der Ansprüche 1 bis 17 ausgebildet und eingerichtet ist.

19. Befestigungsmechanismus (15) zur lösbaren Befestigung eines Messerelementes (13) auf einer Messerwelle (14), **dadurch gekennzeichnet, dass** der Befestigungsmechanismus (15) als Messerschnellverschluss (16) nach einem oder mehreren der Ansprüche 1 bis 17 ausgebildet und eingerichtet ist.
